# FASCICULE DE BREVET EUROPEEN

(11) **EP 2 933 179 B1**
(45) Date de publication et mention de la délivrance du brevet: **13.02.2019**
(21) Numéro de dépôt: 14196820.6
(22) Date de dépôt: 08.12.2014
(51) Int. Cl.: B62K 19/36

(54) **Cadre de cycle et tige de selle associée**
Fahrradrahmen und entsprechende Sattelstange
Bicycle frame and associated seat post

(30) Priorité: 18.04.2014 FR 1453533
(43) Date de publication de la demande: 21.10.2015
(73) Titulaire: Look Cycle International, 58000 Nevers (FR)
(72) Inventeur: BIGARD, Pierre, 60110 MERU (FR)
(74) Mandataire: Petit, Maxime

(56) Documents cités:
- CN-U- 201 494 543
- DE-U1-202007 015 382
- US-A1- 2011 042 543

## Description

La présente invention concerne de manière générale le raccordement d'une selle de cycle à un tube de selle d'un cadre de cycle.

Le raccordement d'une selle sur un cadre de cycle se fait traditionnellement à l'aide d'une tige de selle portant, à l'une de ses extrémités, des moyens de fixation de la selle, alors que son extrémité opposée est insérée dans le tube de selle du cadre de cycle. Un collier de serrage est alors utilisé pour maintenir la tige de selle dans une position longitudinale déterminée par rapport au tube de selle après son insertion et régler ainsi la hauteur de la selle.

Plus récemment, des solutions ont été proposées pour intégrer le plus possible les tiges de selle au cadre du cycle. L'une de ces solutions, décrite notamment dans le document CN201494543U consiste à utiliser une pièce intermédiaire portant la selle et qui vient se fixer à l'extérieur du tube de selle à la façon d'un capuchon. Avec cette solution, le cadre doit être nécessairement prévu avec un long tube de selle pour pouvoir convenir a priori à un maximum de cyclistes. Ainsi, pour régler la hauteur de selle, la seule solution consiste à couper le tube de selle du cadre à la hauteur désirée.

Une autre solution connue consiste à réaliser un système de fixation de la selle directement sur le cadre, le tube de selle faisant office de tige de selle. Ici, le cadre équipé du système de fixation doit être fait en usine, sur mesure pour chaque cycliste.

Selon une autre solution, décrite notamment dans le document EP 1 877 299 B1 au nom de la Demanderesse, la tige de selle est insérée dans le tube de selle, et un épaulement annulaire prévu, soit sur la périphérie intérieure du tube de selle, soit sur la périphérie externe de la tige de selle, permet l'insertion de la tige de selle sur une longueur prédéterminée.

Toutes les solutions précédentes visant à intégrer la tige de selle présentent un avantage esthétique certain et améliorent également l'aérodynamisme du vélo par rapport à une tige de selle traditionnelle.

Néanmoins, le réglage de la hauteur de la selle adaptée à la taille du cycliste ne peut se faire qu'en coupant le tube de selle. Si le tube de selle est coupé trop court, il n'y a aucun moyen de revenir en arrière, autre que de changer intégralement le cadre.

Par ailleurs, si le détenteur du vélo souhaite le revendre en occasion, il lui faudra nécessairement trouver un acheteur de même taille, ou éventuellement plus petit. Ceci peut constituer un frein à l'achat du vélo compte tenu des coûts liés au cadre de cycle.

Enfin, les cadres standards présentent des tubes de selle qui sont généralement long dans la partie s'étendant au-dessus du tube supérieur du cadre. Le rangement du vélo ou son transport, par exemple en avion, est ainsi rendu difficile du fait de l'encombrement du cadre.

La présente invention a pour objectif de pallier les limitations des solutions connues en proposant un système de fixation particulier avec tige de selle intégrée, qui autorise un cadre de cycle avec un tube de selle le moins long possible, pour faciliter notamment son transport, sans nécessité d'avoir à recouper le tube de selle pour régler la hauteur de la selle.

Pour ce faire, la présente invention, ainsi que définie dans la revendication 1, a pour premier objet un cadre de cycle comportant un tube de selle, ledit tube de selle comportant une portion d'extrémité haute apte à être insérée dans un corps de tige de selle creux, caractérisé en ce que le tube de selle comporte en outre un dispositif de fixation apte à bloquer le corps de tige de selle creux par l'intérieur au niveau de la portion d'extrémité haute.

L'invention a également pour objet, conformément à la revendication 10, une combinaison d'une tige de selle avec le cadre de cycle selon la revendication 7.

Selon d'autres caractéristiques possibles du cadre de cycle :
- le cadre comporte en outre de préférence des moyens de maintien du corps de tige de selle comportant une butée apte à coopérer avec une surface de butée du corps de tige de selle pour délimiter la longueur d'insertion de ladite portion d'extrémité haute dans le corps de tige de selle ;
- la butée peut être formée par un épaulement annulaire s'étendant transversalement à l'axe longitudinal du tube de selle dans la zone de jonction entre le tube de selle et la portion d'extrémité haute apte à venir en butée contre une extrémité inférieure du corps de tige de selle ;
- le cadre comportant en outre un tube supérieur reliant le tube de selle à une douille de direction, l'épaulement annulaire formant butée est positionné de préférence à la base de la portion d'extrémité haute, sensiblement dans le prolongement de l'axe longitudinal du tube supérieur ;
- le tube de selle est dimensionné en section pour que sa surface externe soit dans la continuité de la surface externe du corps de tige de selle ;
- le dispositif de fixation comporte une vis dont la tête est accessible depuis l'extérieur du tube de selle, et un tampon tangent faisant coin entre la portion d'extrémité haute du tube de selle et l'intérieur du corps de tige de selle lorsque la vis est vissée ;
- en variante, le dispositif de fixation comporte une vis dont la tête est accessible depuis l'extérieur du tube de selle, et un élastomère entre une plaque s'étendant transversalement à l'intérieur du corps de tige de selle et la partie supérieure de la portion d'extrémité haute du tube de selle ;
- un capot de protection fixé à l'arrière du tube de selle peut être prévu pour cacher la tête de la vis;
- un cache de jonction apte à recouvrir la zone de transition entre le tube de selle et la portion d'extrémité haute peut être prévu.

Selon d'autres caractéristiques possibles de la tige de selle :
- une extrémité inférieure du corps de tige de selle est apte à venir en butée contre une butée du tube de selle pour délimiter la longueur d'insertion de ladite portion d'extrémité haute dans le corps de tige de selle ;
- la tige de selle comporte un dispositif de fixation de selle en partie supérieure apte à permettre la fixation amovible d'une selle ;
- la tige de selle peut comporter une ou plusieurs entretoises amovibles interposées par empilement entre le dispositif de fixation de selle et le corps de tige de selle, pour ajuster finement la hauteur de la selle ;
- au moins une des entretoises est en un matériau élastique, en particulier un élastomère.

D'autres caractéristiques et avantages de la présente invention apparaîtront plus clairement de la description qui va suivre de plusieurs modes de réalisation non limitatifs de l'invention, faite en référence aux figures annexées, dans lesquelles :
- la figure 1 représente une tige de selle montée sur un cadre de cycle selon un exemple de réalisation conforme à l'invention ;
- la figure 2 est une vue partielle agrandie de la figure 1, au niveau de la jonction de la tige de selle et du cadre de cycle ;
- la figure 3 est une vue partielle en éclatée des différents éléments de la figure 2 ;
- la figure 4 est une vue partielle en éclatée sur laquelle seuls les éléments permettant la fixation de la tige de selle sur le cadre ont été représentés ;
- la figure 5 est une vue partielle en coupe latérale de la jonction de la tige de selle et du cadre de cycle de la figure 2 ;
- la figure 6 est une vue partielle en coupe latérale de la jonction d'une tige de selle et d'un cadre de cycle selon un autre mode de fixation possible, conforme à l'invention.

Dans les différentes figures, les éléments identiques ou équivalents porteront les mêmes signes de référence.

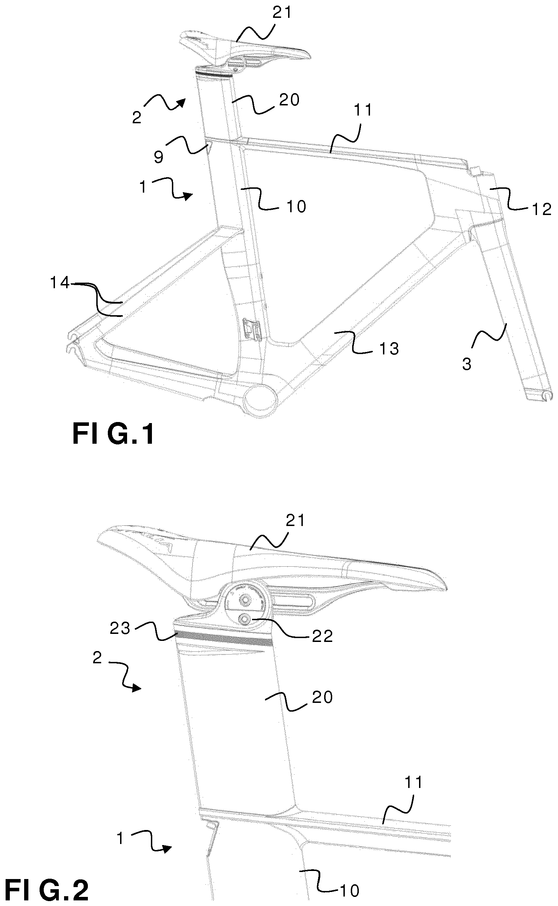

La figure 1 illustre un exemple d'un cadre 1 de cycle accueillant une tige 2 de selle conformément à l'invention, et une fourche 3. Le cadre 1 de cycle comprend classiquement un tube 10 de selle et un tube supérieur 11 reliant le tube 10 de selle à une douille (ou tube) 12 de direction recevant notamment le pivot de la fourche 3. Le cadre 1 de cycle peut optionnellement comporter un tube oblique 13 reliant la douille 12 de direction à un pédalier (non représenté), et des haubans 14 reliant le tube 10 de selle à l'axe de roue arrière. Le cadre 1 de cycle est de préférence réalisé sous forme monobloc, par exemple en un matériau composite.

La tige 2 de selle comprend classiquement un corps 20 de tige de selle sur lequel vient se fixer une selle 21 par l'intermédiaire d'un dispositif 22 de fixation permettant de régler l'inclinaison de la selle 21. Le corps 20 de tige de selle est également réalisé de préférence en un matériau composite.

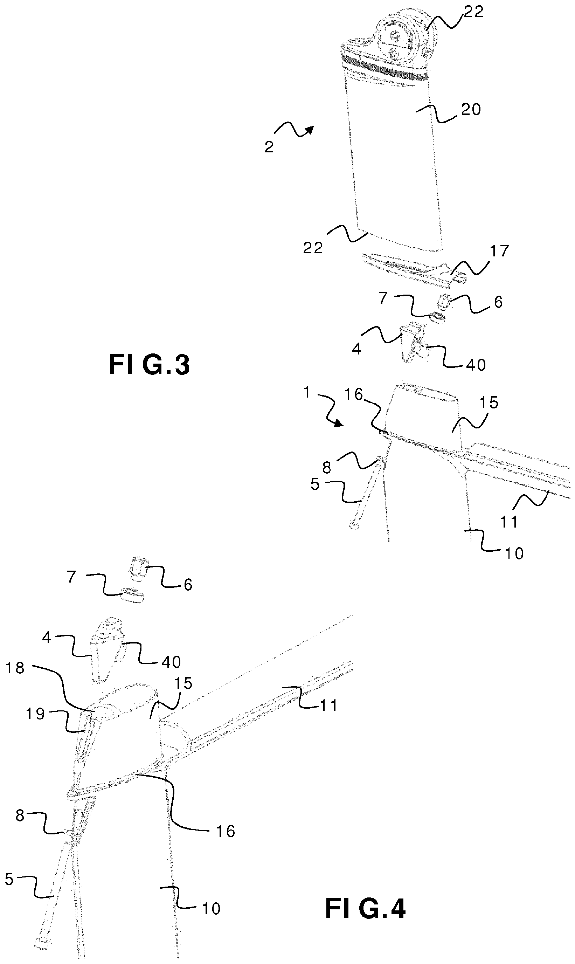

Conformément à l'invention, le corps 20 de tige de selle est creux, au moins dans sa partie inférieure, et apte à recevoir par insertion une portion d'extrémité haute 15 du tube 10 de selle (voir figures 3 à 5).

La tige 2 de selle est de préférence maintenue à une certaine hauteur grâce à une butée 16, par exemple un épaulement annulaire s'étendant transversalement à l'axe longitudinal du tube 10 de selle dans la zone de jonction entre le tube 10 de selle et la portion d'extrémité haute 15 (voir figures 3 et 4), qui vient coopérer avec une surface de butée de la tige de selle 2, par exemple directement avec l'extrémité inférieure 22 (voir figure 3) du corps 20 de tige de selle. Ainsi, la longueur d'insertion de la portion d'extrémité haute 15 dans la tige de selle 2 se voit limitée par cette butée 16.

L'épaulement annulaire formant butée 16 est positionné de préférence à la base de la portion d'extrémité haute 15, sensiblement dans le prolongement de l'axe longitudinal du tube supérieur 11.

Pour des raisons d'esthétisme, le tube 10 de selle est dimensionné en section pour que sa surface externe soit dans la continuité de la surface externe du corps 20 de tige de selle. La portion d'extrémité haute 15 est bien entendu de section moindre de façon à permettre l'insertion dans le corps 20 de tige de selle.

Le tube 10 de selle et la portion d'extrémité haute 15 sont de préférence réalisés en une seule pièce, avec une section pour la portion d'extrémité haute 15 rétrécie par rapport à la section du tube 10 de selle. La butée 16 est alors formée par la surface de transition entre le tube 10 de selle et la portion d'extrémité haute 15. En variante, la portion d'extrémité haute 15 est rapportée sur le dessus du tube 10 de selle. Ce dernier comporte alors une surface transversale d'extrémité formant la butée 16.

Un système d'anti-rotation est de préférence prévu pour éviter que la tige 2 de selle ne tourne autour de la portion d'extrémité haute 15 du tube 10 de selle. Ici, l'anti-rotation est obtenue en réalisant le corps 20 de tige de selle et la portion d'extrémité haute 15 du tube 10 de selle avec des sections transversales non circulaires.

Conformément à un deuxième aspect de l'invention, le tube 10 de selle comporte également un dispositif de fixation apte à bloquer le corps 20 de tige de selle par l'intérieur au niveau de la portion d'extrémité haute 15.

Avant de détailler des modes de réalisation possibles d'un tel dispositif de fixation, il convient de noter à ce stade de la description que le réglage de la hauteur de la selle 21 ne s'effectue plus ici en coupant le tube de selle, mais en coupant l'extrémité inférieure du corps 20 de tige de selle. En cas d'erreur irréversible lors de la coupe, il est ainsi beaucoup moins coûteux pour le cycliste de racheter une tige de selle plutôt que de changer intégralement le cadre de cycle. Un cache 17 de jonction peut être avantageusement prévu au niveau de la zone de transition entre le tube 10 de selle et la portion d'extrémité haute 15 pour cacher les écailles sur la peinture que pourrait faire le recoupage du corps de tige de selle et donner une meilleure finition. Ce cache 17 de jonction vient s'enfiler par exemple sur la portion d'extrémité haute 15 du tube 10 de selle, et entourer la butée 16 au niveau de la zone de transition.

Un réglage fin de la hauteur de selle peut être obtenu en prévoyant un ensemble d'entretoises 23 amovibles, de préférence de différentes hauteurs, que le cycliste peut empiler entre le corps de tige de selle 20 et le dispositif 22 de fixation de la selle 21. De préférence, au moins l'une de ces entretoises 23 est en un matériau élastique, par exemple en élastomère, de façon à absorber les vibrations de la route. Les entretoises ont des hauteurs de l'ordre du millimètre pour permettre au cycliste d'ajuster la hauteur de selle en fonction de l'épaisseur des semelles de ses chaussures et/ou de l'épaisseur de son cuissard le cas échéant.

L'invention permet aussi de réduire la longueur du tube 10 de selle au dessus du noeud de selle à la seule hauteur de la portion d'extrémité haute 15 nécessaire au bon maintien de l'ensemble de selle. Les pièces du vélo, en particulier le cadre 1, peuvent ainsi être beaucoup plus facilement transportées.

Un premier mode de réalisation d'un dispositif de fixation permettant de fixer la tige 2 de selle au cadre 1 du cycle par l'intérieur, conformément à l'invention, va à présent être décrit en référence aux figures 3 à 5 :

Ici, le dispositif de fixation comporte un tampon tangent 4 apte à se déplacer le long d'une vis sans fin 5 traversant un taraudage 40 prévu sur le tampon tangent 4. Le tampon tangent 4 est maintenu dans une fente 18 ouverte latéralement équipant l'arrière de la portion d'extrémité haute 15 du tube 10 de selle, cette fente 18 étant conformée pour accueillir longitudinalement la partie du tampon 4 portant le taraudage 40. Le déplacement du tampon tangent est guidé par une glissière 19 réalisée à l'arrière de la portion d'extrémité haute 15. Un écrou 6 est monté à l'extrémité de la vis 5 au-dessus de la portion d'extrémité haute 15 du tube 10 de selle et sert de butée pour éviter de perdre la vis 5. Pour permettre à la vis 5 de tourner, l'écrou 5 est monté serré sur la bague intérieure d'un roulement 7 prévu dans un logement de la portion d'extrémité haute 15 du tube de selle. Une rondelle 8 est interposée entre la tête de la vis 5 et la surface externe du tube 10 de selle. Lorsque la vis 5 est vissée par un outil adapté depuis l'arrière du tube 10 de selle, le tampon 4 tangent va se déplacer vers le bas le long de la glissière 19 jusqu'à venir en contact avec la paroi interne du corps 20 de tige de selle, et faire coin entre la portion d'extrémité haute 15 du tube 10 de selle et l'intérieur du corps 20 de tige de selle 2. La tige 2 de selle se retrouve ainsi serrée de l'intérieur. Comme visible sur la figure 1, un capot 9 de protection peut être avantageusement fixé à l'arrière du tube 10 de selle pour cacher la tête de la vis 5 et donner une continuité des surfaces extérieures.

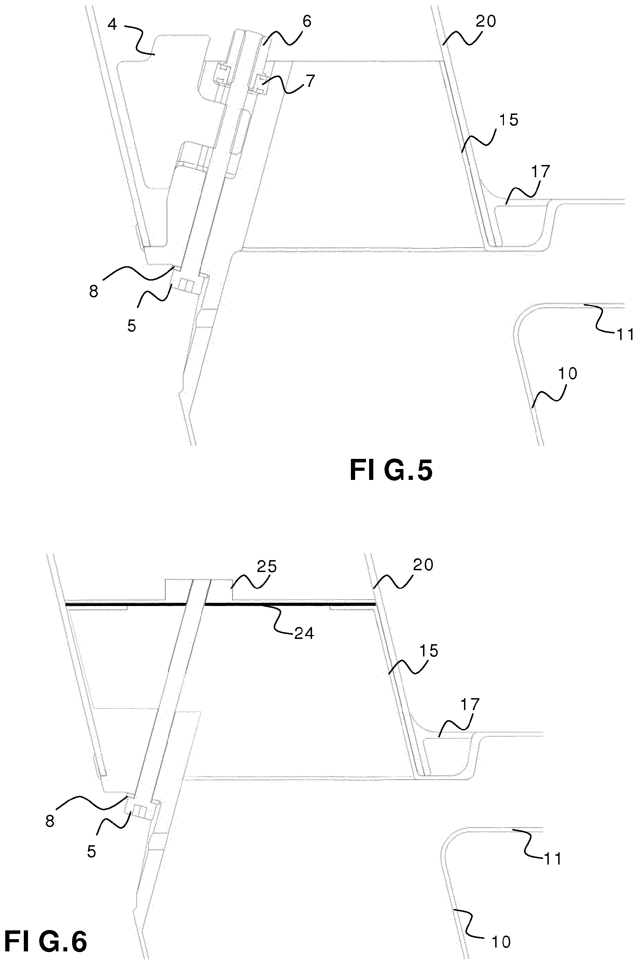

La figure 6 illustre un dispositif de fixation permettant le blocage par l'intérieur selon un autre mode de réalisation :
Ici, un élastomère 24 est prévu entre une plaque 25 qui s'étend transversalement à l'intérieur du corps 20 de tige de selle et la partie supérieure de la portion d'extrémité haute 15 du tube 10 de selle. La vis 5, montée de manière à traverser l'élastomère 24 et un taraudage dans la plaque 25, est utilisée ici pour rapprocher la plaque 25 de l'élastomère 24 qui se gonfle par compression et vient coincer le corps 20 de tige de selle par l'intérieur.

## Revendications

1. Cadre (1) de cycle comportant un tube (10) de selle, ledit tube de selle comportant une portion d'extrémité haute (15) apte à être insérée dans un corps (20) de tige de selle creux, **caractérisé en ce que** le tube (10) de selle comporte en outre un dispositif (4-8 ; 5, 8, 24, 25) de fixation apte à bloquer le corps (20) de tige de selle creux par l'intérieur au niveau de la portion d'extrémité haute.

2. Cadre (1) de cycle selon la revendication 1, **caractérisé en ce qu'**il comporte en outre des moyens de maintien du corps (20) de tige de selle comportant une butée (16) apte à coopérer avec une surface (22) de butée du corps (20) de tige de selle (20) pour délimiter la longueur d'insertion de ladite portion d'extrémité haute (15) dans le corps (20) de tige de selle.

3. Cadre (1) de cycle selon la revendication 2, **caractérisé en ce que** la butée (16) est formée par un épaulement annulaire s'étendant transversalement à l'axe longitudinal du tube (10) de selle dans la zone de jonction entre le tube (10) de selle et la portion d'extrémité haute (15), apte à venir en butée contre une extrémité inférieure (22) du corps (20) de tige de selle.

4. Cadre (1) de cycle selon la revendication 3, comportant en outre un tube supérieur (11) reliant le tube (10) de selle à une douille (12) de direction, **caractérisé en ce que** l'épaulement annulaire formant butée (16) est positionné à la base de la portion d'extrémité haute (15), sensiblement dans le prolongement de l'axe longitudinal du tube supérieur (11).

5. Cadre (1) de cycle selon l'une quelconque des revendications précédentes, **caractérisé en ce que** le tube (10) de selle est dimensionné en section pour que sa surface externe soit dans la continuité de la surface externe du corps (20) de tige de selle.

6. Cadre (1) de cycle selon l'une quelconque des revendications précédentes, **caractérisé en ce que** le dispositif (4-8) de fixation comporte une vis (5) dont la tête est accessible depuis l'extérieur du tube (10) de selle, et un tampon tangent (4) faisant coin entre la portion d'extrémité haute (11) du tube (10) de selle et l'intérieur du corps (20) de tige de selle lorsque la vis (5) est vissée.

7. Cadre (1) de cycle selon l'une quelconque des revendications 1 à 5, **caractérisé en ce que** le dispositif (5, 8, 24, 25) de fixation comporte une vis (5) dont la tête est accessible depuis l'extérieur du tube (10) de selle, et un élastomère (24) entre une plaque (25) s'étendant transversalement à l'intérieur du corps (20) de tige de selle et la partie supérieure de la portion d'extrémité haute (15) du tube (10) de selle.

8. Cadre (1) de cycle selon l'une quelconque des revendications 6 ou 7, **caractérisé en ce qu'**il comporte un capot (9) de protection fixé à l'arrière du tube (10) de selle pour cacher la tête de la vis (5).

9. Cadre (1) de cycle selon l'une quelconque des revendications précédentes, **caractérisé en ce qu'**il comporte un cache (17) de jonction apte à recouvrir la zone de transition entre le tube (10) de selle et la portion d'extrémité haute (15).

10. Combinaison d'une tige (2) de selle et d'un cadre (1) de cycle selon la revendication 7, ladite tige (2) de selle destinée à coopérer avec le cadre (1) de cycle, **caractérisée en ce que** ladite tige (2) de selle comporte ledit corps (20) de tige de selle creux apte à être bloqué par l'intérieur au niveau de la portion d'extrémité haute (15), et ladite plaque (25) .

11. Combinaison selon la revendication 10, **caractérisée en ce qu'**une extrémité inférieure (22) du corps (20) de tige de selle est apte à venir en butée contre une butée (16) du tube (10) de selle pour délimiter la longueur d'insertion de ladite portion d'extrémité haute (15) dans le corps (20) de tige de selle.

12. Combinaison selon l'une quelconque des revendications 10 ou 11, **caractérisée en ce que** la tige (2) de selle comporte un dispositif (22) de fixation de selle en partie supérieure du corps (20) de tige de selle, apte à permettre la fixation amovible d'une selle (21).

13. Combinaison selon l'une quelconque des revendications 10 à 12, **caractérisée en ce que** la tige (2) de selle comporte une ou plusieurs entretoises (23) amovibles interposées par empilement entre le dispositif (22) de fixation de selle et le corps (20) de tige de selle, pour ajuster finement la hauteur de la selle (21).

14. Combinaison selon la revendication 13, **caractérisée en ce qu'**au moins une des entretoises (23) est en un matériau élastique, en particulier un élastomère.

## Patentansprüche

1. Fahrradrahmen (1), aufweisend ein Sattelrohr (10), wobei das Sattelrohr einen hohen Endabschnitt (15) aufweist, der imstande ist, in einen hohlen Sattelstangenkörper (20) eingesetzt zu sein, **dadurch gekennzeichnet, dass** die Sattelrohr (10) ferner eine Befestigungsvorrichtung (4-8; 5, 8, 24, 25) aufweist, die imstande ist, den hohlen Sattelstangenkörper (20) von innen im Bereich des hohen Endabschnitts zu blockieren.

2. Fahrradrahmen (1) nach Anspruch 1, **dadurch gekennzeichnet, dass** er ferner Haltemittel des Sattelstangenkörpers (20) aufweist, aufweisend einen Anschlag (16), der imstande ist, mit einer Anschlagoberfläche (22) des Sattelstangenkörpers (20) zusammenzuwirken, um die Einsetzlänge des hohen Endabschnitts (15) in den Sattelstangenkörper (20) zu begrenzen.

3. Fahrradrahmen (1) nach Anspruch 2, **dadurch gekennzeichnet, dass** der Anschlag (16) von einem ringförmigen Absatz gebildet ist, der sich quer zur Längsachse des Sattelrohrs (10) in der Verbindungszone zwischen dem Sattelrohr (10) und dem hohen Endabschnitt (15) erstreckt, der imstande ist, gegen ein unteres Ende (22) des Sattelstangenkörpers (20) in Anschlag zu kommen.

4. Fahrradrahmen (1) nach Anspruch 3, aufweisend ferner ein oberes Rohr (11), welches das Sattelrohr (10) mit einer Lenkbuchse (12) verbindet, **dadurch gekennzeichnet, dass** der ringförmige Absatz, der einen Anschlag (16) bildet, an der Basis des hohen Endabschnitts (15) etwa in der Verlängerung der Längsachse des oberen Rohrs (11) positioniert ist.

5. Fahrradrahmen (1) nach einem der vorangehenden Ansprüche, **dadurch gekennzeichnet, dass** das Sattelrohr (10) im Querschnitt bemessen ist, damit seine äußere Oberfläche in der Kontinuität der äußeren Oberfläche des Sattelstangenkörpers (20) ist.

6. Fahrradrahmen (1) nach einem der vorangehenden Ansprüche, **dadurch gekennzeichnet, dass** die Befestigungsvorrichtung (4-8) eine Schraube (5) aufweist, deren Kopf von außerhalb des Sattelrohrs (10) erreichbar ist, und einen tangentialen Puffer (4), der zwischen dem hohen Endabschnitt (11) des Sattelrohrs (10) und dem Inneren des Sattelstangenkörpers (20) eine Ecke bildet, wenn die Schraube (5) angezogen ist.

7. Fahrradrahmen (1) nach einem der Ansprüche 1 bis 5, **dadurch gekennzeichnet, dass** die Befestigungsvorrichtung (5, 8, 24, 25) eine Schraube (5) aufweist, deren Kopf von außerhalb des Sattelrohrs (10) erreichbar ist, und ein Elastomer (24) zwischen einer Platte (25), die sich quer zum Inneren des Sattelstangenkörpers (20) und dem oberen Teil des hohen Endabschnitts (15) des Sattelrohrs (10) erstreckt.

8. Fahrradrahmen (1) nach einem der Ansprüche 6 oder 7, **dadurch gekennzeichnet, dass** er eine Schutzkappe (9) aufweist, die hinter dem Sattelrohr (10) befestigt ist, um den Kopf der Schraube (5) zu verbergen.

9. Fahrradrahmen (1) nach einem der vorangehenden Ansprüche, **dadurch gekennzeichnet, dass** er eine Verbindungsmaske (17) aufweist, die imstande ist, die Übergangszone zwischen dem Sattelrohr (10) und dem hohen Endabschnitt (15) abzudecken.

10. Kombination aus einer Sattelstange (2) und einem Fahrradrahmen (1) nach Anspruch 7, wobei die Sattelstange (2) dazu bestimmt ist, mit dem Fahrradrahmen (1) zusammenzuwirken, **dadurch gekennzeichnet, dass** die Sattelstange (2) den hohlen Sattelstangenkörper (20) aufweist, der imstande ist, von innen im Bereich des hohen Endabschnitt (15) blockiert zu sein, und die Platte (25).

11. Kombination nach Anspruch 10, **dadurch gekennzeichnet, dass** ein unteres Ende (22) des Sattelstangenkörpers (20) imstande ist, gegen einen Anschlag (16) des Sattelrohrs (10) in Anschlag zu kommen, um die Einsetzlänge des hohen Endabschnitts (15) in den Sattelstangenkörper (20) zu begrenzen.

12. Kombination nach einem der Ansprüche 10 oder 11, **dadurch gekennzeichnet, dass** die Sattelstange (2) eine Sattelbefestigungsvorrichtung (22) im oberen Teil des Sattelstangenkörpers (20) aufweist, die imstande ist, die lösbare Befestigung eines Sattels (21) zu erlauben.

13. Kombination nach einem der Ansprüche 10 bis 12, **dadurch gekennzeichnet, dass** die Sattelstange (2) eine oder mehrere lösbare Streben (23) aufweist, die gestapelt zwischen der Sattelbefestigungsvorrichtung (22) und dem Sattelstangenkörper (20) angeordnet sind, um die Höhe des Sattels (21) feineinzustellen.

14. Kombination nach Anspruch 13, **dadurch gekennzeichnet, dass** mindestens eine der Streben (23) aus einem elastischen Material, insbesondere einem Elastomer, ist.

## Claims

1. Frame (1) of a bicycle comprising a saddle tube (10) wherein the saddle tube comprises an upper end portion (15) that is designed to be inserted into the body (20) of a hollow seat post, **characterized in that** the saddle tube (10) further comprises a fastening device (4-8; 5, 8, 24, 25) that is designed to lock the hollow seat post body (20) at the upper end portion from the inside.

2. Frame (1) of a bicycle according to claim 1, **characterized in that** it further comprises means for holding the body (20) of the seat post that comprise a stop (16) that is designed to interact with an abutment surface (22) of the seat post body (20) in order to define the insertion length of the upper end portion (15) in the seat post body (20).

3. Frame (1) of a bicycle according to claim 2, **characterized in that** the stop (16) is formed by an annular shoulder extending transversely to the longitudinal axis of the seat tube (10) in the junction area between the seat tube (10) and the upper end portion (15), wherein it is designed to abut against a lower end (22) of the seat post body (20).

4. Frame (1) of a bicycle according to claim 3, further comprising an upper tube (11) connecting the seat tube (10) to a directional sleeve (12), **characterized in that** the annular shoulder forming a stop (16) is positioned at the base of the upper end portion (15) substantially in the extension of the longitudinal axis of the upper tube (11).

5. Frame (1) of a bicycle according to any one of the preceding claims, **characterized in that** the saddle tube (10) is so dimensioned in section that its outer surface is a continuation of the outer surface of the body (20) of the seat post.

6. Frame (1) of a bicycle according to any one of the preceding claims, **characterized in that** the fastening device (4-8) comprises a screw (5) whose head is accessible from outside the saddle tube (10), and a tangential pad (4) wedged between the upper end portion (11) of the seat tube (10) and the inside of the seat post body (20) when the screw (5) is screwed in.

7. Frame (1) of a bicycle according to any one of the claims 1 to 5, **characterized in that** the fastening device (5, 8, 24, 25) comprises a screw (5) whose head is accessible from outside the seat tube (10), and an elastomer (24) between a plate (25) extending transversely within the seat post body (20) and the upper part of the upper end portion (15) of the seat tube (10).

8. Frame (1) of a bicycle according to any one of the claims 6 or 7, **characterized in that** it comprises a protection cover (9) attached to the rear of the tube (10) of the seat to hide the head of the screw (5).

9. Frame (1) of a bicycle according to any one of the preceding claims, **characterized in that** it comprises a junction cover (17) to cover the transition zone between the seat tube (10) and the upper end portion (15).

10. Combination of a seat post (2) and a cycle frame (1) according to claim 7, wherein the seat post (2) is designed to interact with the cycle frame (1), **characterized in that** the seat post (2) comprises the hollow seat post body (20) that is capable of being internally blocked at the upper end portion (15), and the plate (25).

11. Combination according to claim 10, **characterized in that** a lower end (22) of the seat post body (20) is designed to abut against a stop (16) of the seat tube (10) in order to delimit the insertion length of the upper end portion (15) into the seat post body (20).

12. Combination according to any one of the claims 10 or 11, **characterized in that** the seat post (2) comprises a device (22) for fastening the saddle in the upper part of the seat post body (20), to allow the removable attachment of a saddle (21).

13. Combination according to any one of the claims 10 to 12, **characterized in that** the seat post (2) comprises one or more movable spacers (23) that are interposed in the form of a stack between the seat fastening device (22) and the seat post body (20) for the fine adjustment of the height of the saddle (21).

14. Combination according to claim 13, **characterized in that** at least one of the spacers (23) is an elastic material, in particular an elastomer.
